# EUROPEAN PATENT SPECIFICATION

(11) **EP 3 451 858 B1**
(45) Date of publication and mention of the grant of the patent: **18.12.2019**
(21) Application number: 17735677.1
(22) Date of filing: 01.05.2017
(51) Int. Cl.: A23L 29/262, A23L 13/60, A23L 13/50

(54) **FOOD PRODUCTS COMPRISING METHYLCELLULOSE**
LEBENSMITTELPRODUKTE MIT METHYLCELLULOSE
PRODUITS ALIMENTAIRES COMPRENANT DE LA MÉTHYLCELLULOSE

(30) Priority: 03.05.2016 US 201662331145 P
(43) Date of publication of application: 13.03.2019
(73) Proprietor: Dow Global Technologies, LLC, Midland, MI 48674 (US)
(72) Inventor: HUEBNER-KEESE, Britta, 29699 Bomlitz (DE); KNARR, Matthias, 29699 Bomlitz (DE)
(74) Representative: DuPont EMEA
(86) International application number: PCT/US2017/030392
(87) International publication number: WO 2017/192445

(56) References cited:
- EP-A2- 1 493 337
- WO-A1-2013/059064

## Description

### FIELD

This invention relates to food products which comprise i) a filling comprising animal, fungal or plant protein and ii) a casing.

### INTRODUCTION

Food products, such as sausages or cold cuts, are widely known. Their production dates back centuries. Nowadays, more and more sausage manufactures pursue improved sausage textural quality such as smooth surface and section, high oil / fat and water retention during cooking, and organoleptic quality. Their other concern is the control of manufacturing costs without reducing quality.

A cooked sausage is a food product which requires processing the food ingredients into an emulsion, followed by shaping and heating to solidify the product to a stable physical form. In this emulsion system the continuous phase (matrix) is mainly composed of water and animal, fungal or plant protein and further additives, such as binders and spices, and the dispersed phase is fat or oil which is embedded in the matrix and stabilized by protein or other materials with surface activity. The matrix ties the fat and water tightly into the whole system.

The term "cold cuts", also known as "luncheon meats", "sandwich meats" or "sliced meats" refers to precooked or cured meat, often sausages, which are sliced and served cold on sandwiches or on party trays. In one aspect the term "cold cuts" designates a type of sausage that is not consumed hot but sliced and consumed cold. Vegetarian cold cuts are also known, wherein the meat is replaced by food ingredients derived from plants including plant-based protein.

Sausages typically comprise soft cylindrical containers, designated as casings, which are used to contain sausage mixes. Casings can be of natural origin or artificial. Natural casings are obtained from animal intestines derived from slaughtering. Manufactured artificial casings are made of cellulose, collagen or synthetic materials. Sausage fillings are mostly comminuted blends comprising animal, fungal or plant proteins and fats or oils and held together by the casings during further processing steps such as smoking, boiling, frying or roasting. Natural casings are permeable to water vapor and gases, thus allowing fillings to dry. Artificial casings can be subdivided into 1) casings made of natural materials, and 2) casings made of synthetic substances deriving from thermoplastic materials ("synthetic casings"). Artificial casings made of natural materials can be subdivided into cellulosic casings and collagen casings; both types are permeable to gases, smoke and water vapor. Synthetic casings are mechanically strong, relatively heat resistant, impermeable to smoke, gases and water vapor. Synthetic casings are particularly useful for sausages with larger caliber, sausages where water vapor losses are not wanted, sausages to be cooked at relatively high temperatures and sausages with long shelf life and good preservation of taste and flavor. Suitable materials are polyamide (PA), polyethylene (PE), polypropylene (PP), polyvinylidenchloride (PVDC) and polyester (PET). The above-mentioned categorization of casings is disclosed in the FAO *(Food and Agriculture Organization of the United Nations)* Corporate Document Repository under the Title "Meat processing technology for small and medium-scale producers" under the keyword "Casings".

Sausages, including vegetarian sausages and cold cuts, are widely consumed but their high fat content is of concern to many consumers and health specialists. Accordingly, huge efforts have been undertaken to decrease the fat content in sausages. Additionally, more and more sausage manufactures pursue the reduction of animal, fungal or plant proteins, such as the reduction of lean meat, to reduce production costs. Production costs should be reduced without reducing sausage textural quality, such as smooth surface and section, high oil and water retention during cooking, and organoleptic quality. Binders have become very important in enabling fat reduction or cost reduction or in improving other properties in sausages, such as improving the water binding capacity during the cooking process and/or the juiciness after cooking.

International Patent Application No. 2014/117349 discloses a sausage additive that comprises (a) a natural gum comprising a polysaccharide hydrocolloid, (b) carrageenan, and (c) a cellulose ether. Preferred cellulose ethers are hydroxypropyl methylcellulose (HPMC), such as METHOCEL™ F50, or methylcellulose (MC) which are commercially available as METHOCEL™ MX (DS_{methyl}= 1.8, viscosity = 50,000 mPa•s, measured as a 2 wt.-% solution in water at 25 °C using a Brookfield LVT viscometer (3# spindle, testing speed 50 rpm) or METHOCEL™ SG A7C (DS_{methyl} = 1.9, viscosity = 700 mPa•s, measured as a 2 wt.-% solution in water at 25 °C). The METHOCEL™ cellulose ethers are commercially available from The Dow Chemical Company, Midland, U.S.A.

The publication of Brenntag Specialties, Food & Nutrition Europe, recommends the use of an emulsion of METHOCEL™ MX methylcellulose as a binder in low fat sausages to achieve a fat reduction of 30 % as well as a binder in low cost sausages to achieve a reduction in the meat content and hence a reduction in production costs. The publication discloses that the emulsion of METHOCEL™ MX methylcellulose will gel as the sausage cooks, further enhancing the stability of the emulsion and providing a strong "bite" and succulence to the finished product.

European Patent Application No. 1493337 discloses a vegetarian sausage emulsion comprising high gelling methylcellulose.

US patent application No. 2011/0091632 discloses a meat additive comprising a water-soluble cellulose ether which turns into a gel when heated. A variety of cellulose ethers including HPMC and MC are suggested. The specifically suggested MC has a viscosity of 4000 mPa•s, measured as a 2.0 % by weight aqueous solution at 20° C using an Ubbelohde viscometer, and 29% methoxyl content.

Although the above-mentioned binders provide great advantages in sausages, further improvements in the water binding capacity is still desired for food products which have casings that are impermeable for smoke, gases and water vapor. When water vapor cannot evaporate through the casing during the cooking process, a two phase system is formed when water separates from the remainder of the filling. Even small amounts of separated water can be observed in the casing. This is not acceptable to many consumers. Hence, there is a need for further improving the water binding capacity in food products, such as sausages, having such casings.

Surprisingly, it has been found that the water binding capacity in food products having a water vapor impermeable casing can be further improved if the food product comprises a methylcellulose wherein the methyl groups have a unique distribution in the anhydroglucose units of the methylcellulose.

### SUMMARY

One aspect of the present invention is a food product which comprises (a) a casing made of a mono- or multilayered film of which at least one layer comprises a film-forming synthetic polymer and (b) a filling comprising animal, fungal or plant protein and a methylcellulose having anhydroglucose units joined by 1-4 linkages wherein hydroxy groups of anhydroglucose units are substituted with methyl groups such that s23/s26 is from 0.10 to 0.24, wherein s23 is the molar fraction of anhydroglucose units wherein only the two hydroxy groups in the 2- and 3-positions of the anhydroglucose unit are substituted with methyl groups and wherein s26 is the molar fraction of anhydroglucose units wherein only the two hydroxy groups in the 2- and 6-positions of the anhydroglucose unit are substituted with methyl groups.

Another aspect of the present invention is a method of improving one or more properties selected from water binding capacity, juiciness, texture; resistance to shrinking during cooking, or boil-out control in a food product which comprises (a) a casing made of a mono- or multilayered film of which at least one layer comprises a film-forming synthetic polymer and (b) a filling comprising animal, fungal or plant protein, which method comprises the step of incorporating into the filling a methylcellulose having anhydroglucose units joined by 1-4 linkages wherein hydroxy groups of anhydroglucose units are substituted with methyl groups such that s23/s26 is from 0.10 to 0.24, wherein s23 is the molar fraction of anhydroglucose units wherein only the two hydroxy groups in the 2- and 3-positions of the anhydroglucose unit are substituted with methyl groups and wherein s26 is the molar fraction of anhydroglucose units wherein only the two hydroxy groups in the 2- and 6-positions of the anhydroglucose unit are substituted with methyl groups.

### DESCRIPTION OF EMBODIMENTS

The food product of the present invention is preferably a processed food product, more preferably a processed meat or meat analogue product. The term "processed food product" as used herein means any food product which has been modified in order either to improve its taste or extend its shelf life. Methods of food processing, such as meat processing are salting, curing, chopping, fermentation, boiling, smoking, extrusion or other processes. Food products of the present invention include, for example, emulsified meat products, emulsified vegetarian protein products, chopped meat products or pet food, preferably emulsified meat products or emulsified vegetarian protein products, such as sausages, including sausage-type cold cuts (Aufschnitt) or other cold cuts, provided that they have (a) a casing made of a mono- or multilayered film of which at least one layer comprises a film-forming synthetic polymer and (b) a filling comprising animal, fungal or plant protein and a methylcellulose. The food product of the present invention is typically designed for consumption after cooking.

Although the term "sausage" generally relates to a food product having an approximately cylindrical shape, corresponding products having a non-cylindrical shape are also encompassed herein by the term "sausage". The term "sausage" as used herein also encompasses products known as "cold cuts". Meat-based as well as vegetarian sausages (including cold cuts) are encompassed by the term "sausage".

The food product of the present invention comprises a casing made of a mono- or multilayered film of which at least one layer comprises a film-forming synthetic polymer. Such casings for processed meat products are well known in the art. Nowadays the casings, such as sausage casings, are typically made of 1 - 5 layered films. The film-forming polymer of at least one film layer is preferably a thermoplastic synthetic polymer, more preferably a polyamide, polyethylene, polypropylene, polyvinylidenchloride or polyester. The film layer can contain adjuvants, such as plasticizers, colorants or other known additives, but they should not substantially affect the film-forming properties of the synthetic polymer and other properties that are provided by the synthetic polymer to the casing, such as its known impermeability to smoke, water vapor or other gases. Water vapor impermeable casings typically have water vapor permeability of not more than 10 g/m²·d, preferably not more than 9 g/m²·d (gram per m² casing and day), measured according to DIN 53122 at 38 °C and 100% relative humidity. The casing of the food product of the present invention should generally be water vapor impermeable, i.e., have a water vapor permeability of not more than 10 g/m²·d, preferably not more than 9 g/m²·d. A wide variety of water vapor impermeable casings are disclosed in the art, e.g., in European Patent Application Nos. EP 0 603 676 and EP 1 817 962 and in International Patent Application No. WO 2005/113236. When the casing is filled, the casing generally has about cylindrical shape, but other cross-sections may also be suitable. The food product, i.e., its casing when filled, preferably has a diameter of at least 3 cm and more preferably of at least 5 cm. Its diameter generally is up to 60 cm, preferably up to 30 cm, more preferably up to 15 cm, and most preferably up to 8 cm.

Furthermore, the food product of the present invention comprises a filling comprising animal, fungal or plant protein and a certain methylcellulose.

The nature of the methylcellulose is essential to the present invention. Methylcellulose has anhydroglucose units joined by 1-4 linkages. Each anhydroglucose unit contains hydroxyl groups at the 2, 3, and 6 positions. Partial or complete substitution of these hydroxyls with methoxyl groups creates methylcellulose. For example, treatment of cellulosic fibers with caustic solution, followed by a methylating agent, yields cellulose ethers substituted with one or more methoxyl groups. If not further substituted with other alkyls, this cellulose ether is known as methylcellulose. Methylcellulose is characterized by the weight percent of methoxyl groups. By convention, the weight percent is an average weight percentage based on the total weight of the cellulose repeat unit, including all substituents. The content of the methoxyl group is reported based on the mass of the methoxyl group (i.e., -OCH₃). The determination of the % methoxyl in methylcellulose (MC) polymer is carried out according to the United States Pharmacopeia (USP 37, "Methylcellulose", pages 3776-3778). The % methoxyl can be converted into degree of substitution (DS) for methyl substituents, DS(methyl). DS(methyl), also designated as DS(methoxyl), of a methylcellulose is the average number of OH groups substituted with methyl groups per anhydroglucose unit. Preferably, methylcellulose has % methoxyl of 18% or more; more preferably 25% or more. Preferably, ingredient (b) has % methoxyl of 50% or less; more preferably 40% or less; and even more preferably 35% or less. Even more preferably, methylcellulose has a DS(methyl) of 1.55 or higher; more preferably 1.65 or higher; and most preferably 1.70 or higher. DS(methyl) is preferably 2.25 or lower; more preferably 2.20 or lower; and most preferably 2.10 or lower.

In the present invention an essential characterization of methylcellulose is the quotient s23/s26. The numerals 2, 3, and 6 refer to the carbon atoms on the anyhdroglucose units, defined as in structure I:

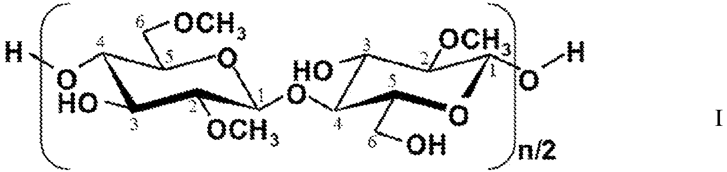

The parameter s23 is the molar fraction of anhydroglucose units wherein only the two hydroxy groups in the 2- and 3-positions of the anhydroglucose unit are substituted with methyl groups, and the parameter s26 is the molar fraction of anhydroglucose units wherein only the two hydroxy groups in the 2- and 6-positions of the anhydroglucose unit are substituted with methyl groups. For determining the s23, the term "the molar fraction of anhydroglucose units wherein only the two hydroxy groups in the 2- and 3-positions of the anhydroglucose unit are substituted with methyl groups" means that the two hydroxy groups in the 2- and 3-positions are substituted with methyl groups and the 6-positions are unsubstituted hydroxy groups. For determining the s26, the term "the molar fraction of anhydroglucose units wherein only the two hydroxy groups in the 2- and 6-positions of the anhydroglucose unit are substituted with methyl groups" means that the two hydroxy groups in the 2- and 6-positions are substituted with methyl groups and the 3-positions are unsubstituted hydroxy groups. The quotient s23/s26 is determined by dividing s23 by s26. In the present invention s23/s26 is 0.24 or less and preferably 0.23 or less. Moreover, s23/s26 is 0.10 or more, preferably 0.14 or more, more preferably 0.16 or more, most preferably 0.18 or more and particularly 0.20 or more. Methylcellulose having such s23/s26 ratio can be produced as generally described in International Patent Application, publication No. WO 2013/059064. A specific process for producing a methylcellulose having an above-mentioned s23/s26 ratio is described in the Examples section.

The viscosities of the methylcelluloses are determined as a 2 wt.-% solution in water at 5°C in view of their low gelation temperatures. The 2 wt.-% methylcellulose solution in water is prepared under stirring, cooling to a temperature of 1.5 °C for 3 hours and storing in a refrigerator at 5 °C overnight. The steady-shear-flow viscosities η of solutions of 2 wt.-% methylcellulose in water are measured at 5° C. at a shear rate of 10 s⁻¹ with an Anton Paar Physica MCR 501 rheometer and cone-and-plate sample fixtures (CP-50/1°, 50-mm diameter). Preferably, the methylcellulose has a viscosity of 5,000 mPa•s or more; more preferably 10,000 mPa•s or more; and most preferably 15,000 mPa•s or more. Preferably, these methylcelluloses have a viscosity of 100,000 mPa•s or less; more preferably 50,000 mPa•s or less, and most preferably 25,000 mPa•s or less, all viscosities measured as a 2 wt.-% solution in water at 5 °C.

Preferably the amount of the methylcellulose, based on the total weight of the filling of the food product, is 0.2 % or more, more preferably 0.3 % or more, even more preferably 0.5 % or more, and most preferably 0.6 % or more. Preferably the amount of the methylcellulose, based on the total weight of the filling of the food product, is 3.0 % or less, preferably 2.0 % or less, even more preferably 1.5 % or less, and most preferably 1.0 % or less.

The filling of the food product of the present invention also comprises animal protein, fungal protein or plant protein. Proteins are macromolecules that contain one or more chain of amino acid residues. Preferably the amount of protein, based on the total weight of the filling, is 2 % or more, more preferably 4 % or more, and most preferably 5 % or more. Preferably the amount of protein, based on the total weight of the filling, is 25 % or less, more preferably 20 % or less, and most preferably 15 % or less. Preferred sources of animal proteins are comminuted animal fats, comminuted lean meats, or other products derived from animals, e.g., eggs or dairy products such as whey or casein or combinations thereof. Exemplary thereof are comminuted beef, veal, pork, lamb, horse, fish or poultry. Preferred sources of plant proteins are soy, wheat, legume proteins, e.g. pea and chickpea, lupine, rice, canola, and mixtures thereof. A preferred source of fungal proteins, also known as mycoproteins, is Quorn.

Preferably, the filling of the food product comprises one or more animal or plant fats or oils. Animal or plant fats or oils are known; they are esters derived from glycerol and three fatty acids. Pork fat, chicken fat, turkey fat, lamb fat, cow fat, horse fat and skins having a high fat content, such as duck skin, turkey skin or chicken skin, are preferred animal fats. Preferred plant fats are soybean oil, sunflower oil, vegetable oil, palm oil, palm kernel oil, canola oil, rapeseed oil, coconut fat, cotton seed oil, peanut oil, olive oil, safflower oil, corn oil, wheat germ oil, Preferably, the amount of fat or oil, based on the total weight of the filling, is 5% or more, more preferably 10% or more, and even more preferably 15% or more. Preferably, the amount of fat, based on the total weight of the filling, is 40% or less, more preferably 30% or less, and more preferably 25% or less.

Preferably, the filling of the food product of the present invention comprises water. Preferably, the amount of water, based on the total weight of the filling, is 20% or more, and more preferably 30% or more. Preferably, the amount of water, based on the total weight of the filling, is 80% or less, and more preferably 60% or less. The amount of water, as used herein, refers to the added amount of water, excluding the amount that is present in the protein source, such as a meat.

Depending on the traditions and legal provisions of the respective countries, the filling of the food product of the present invention preferably also comprise one or more dry ingredients selected from sodium chloride, sodium chloride with nitrite (= curing salt; Nitritpokelsalz), sodium phosphates, sodium ascorbates, caseinates, citrates, sodium carbonates, one or more sugars, sweeteners, flavoring agents, flavor enhancers, starches, gluten, spices/seasonings, emulsifiers, preservatives and mixtures thereof.

Optionally, the filling of the food product comprises one or more sugars. As used herein, the term "sugar" refers to monosaccharides and disaccharides. Preferred sugars are sucrose, fructose, glucose (also known as dextrose), and mixtures thereof. Preferably the amount of sugar, based on the total weight of the filling, is 0.1 % or more, more preferably 0.2 % or more, and most preferably 0.3 % or more. Preferably the amount of sugar, based on the total weight of the filling, is 5% or less, more preferably 3 % or less, and most preferably 1 % or less.

Preferably, the filling of the food product of the present invention comprises sodium chloride or sodium chloride with nitrite (curing salt). Preferably, the amount of sodium chloride is, based on the total weight of the filling of the food product, 0.1 % or more; and more preferably 0.2 % or more. Preferably, the amount of sodium chloride is, based on the total weight of the filling of the food product, 5% or less, more preferably 3 % or less.

Preferably, the filling of the food product comprises one or more starches, such as potato starch or maize starch. Preferably, the amount of starch, based on the total weight of the filling, is 0.2 % or more, and more preferably 0.5 % or more. Preferably, the amount of starch, based on the total weight of the filling, is 5% or less and more preferably 3 % or less.

Preferably, the filling of the food product comprises one or more ingredients selected from sodium phosphates, sodium ascorbates, caseinates, citrates, sodium carbonates, sweeteners, flavoring agents, flavor enhancers, gluten, spices/seasonings, emulsifiers and preservatives. The amount of each ingredient, if present, is preferably 0.01 % or more, and more preferably 0.02 % or more, based on the total weight of the filling. The amount of each ingredient, if present, is preferably 2 % or less, and more preferably 1 % or less, based on the total weight of the filling. Preferably, the filling of the food product comprises no or not more than 0.05 wt.-% of a fiber-containing pectin product or pectin, based on the total weight of the filling of the food product.

The above described methylcellulose is generally incorporated into the filling of the food product before or during its processing. The term "processing" as used herein means any individual step or a combination of steps that is or are applied in the production of the filling of the food product, such as mixing, mincing and/or chopping the components of the filling to be prepared, heat treatment or freezing. The methylcellulose is typically incorporated into the filling of the meat product before the filling is stuffed into the casing. The food product is preferably an emulsified meat product, emulsified vegetarian protein product, chopped meat product or pet food, preferably an emulsified meat product or emulsified vegetarian protein product, such as sausages, including sausage-type cold cuts. The above described methylcellulose exhibits a water binding capacity in the food products of the present invention, particularly during processing such as cooking, which is considerably higher than that of other methylcelluloses. Hence, an increased structural stability or cohesion of the food is achieved. Alternatively, the use of the above described methylcellulose in the food product allows a higher water content in the food product while still obtaining a similar consistency and texture as compared to a food product that has a lower amount of water and that comprises other methylcelluloses.

Processes for preparing food products comprising (a) a casing and (b) a filling comprising animal, fungal or plant proteins, such as comminuted (ground) meat or soy or wheat, are generally known in the art. Meat-based sausages are prepared in a process where crushed ice/water, comminuted (ground) fat, comminuted (ground) meat, sodium chloride or sodium chloride with nitrite, additives such as caseinate, citrate, carbonate, phosphate or a mixture thereof, spices/seasonings and optionally coloring agents are chopped and processed and subsequently pressed into casings. The production of vegetarian sausages is also known. The term "food product" as used herein encompasses meat products which are not ready for consumption yet, e.g., non-cooked sausages, as well as meat products which are ready for consumption, e.g. cooked sausages.

### EXAMPLES

Some embodiments of the invention will now be described in detail in the following Examples. Unless otherwise mentioned, all parts and percentages are by weight. In the Examples the following test procedures are used.

### Determination of the DS(methyl) of Methylcellulose

The determination of the % methoxyl in methylcellulose is carried out according to the United States Pharmacopeia (USP37). The values obtained are % methoxyl. These are subsequently converted into degree of substitution (DS) for methyl substituents. Residual amounts of salt are taken into account in the conversion.

### Determination of the Viscosity of 2 wt.-% Methylcellulose in Water

To obtain a 2% aqueous solution of methylcellulose, 3 g of milled, ground, and dried methylcellulose (under consideration of the water content of the methylcellulose) were added to 147 g of tap water (temperature 20 - 25 °C) at room temperature while stirring with an overhead lab stirrer at 750 rpm with a 3-wing (wing = 2 cm) blade stirrer. The solution was then cooled to 1.5 °C. After the temperature of 1.5 °C was reached the solution was stirred for 180 min at 750 rpm. Prior to use or analysis, the solution was stirred for 15 min at 100 rpm in an ice bath.

The steady-shear-flow viscosities η (5° C, shear rate 10 s⁻¹, 2 wt. % MC) of aqueous 2 wt.-% methylcellulose solutions were measured at 5° C. at a shear rate of 10 s⁻¹ with an Anton Paar Physica MCR 501 rheometer and cone-and-plate sample fixtures (CP-50/1°, 50-mm diameter).

### Determination of s23/s26 of Methylcellulose

The approach to measure the ether substituents in methylcellulose is generally known. See for example the approach described in principle for Ethyl Hydroxyethyl Cellulose in Carbohydrate Research, 176 (1988) 137-144, Elsevier Science Publishers B.V., Amsterdam, DISTRIBUTION OF SUBSTITUENTS IN O-ETHYL-O-(2-HYDROXYETHYL)CELLULOSE by Bengt Lindberg, Ulf Lindquist, and Olle Stenberg.

Specifically, the determination of s23/s26 in methylcellulose is conducted as follows: 10-12 mg of the methylcellulose are dissolved in 4.0 mL of dry analytical-grade dimethyl sulfoxide (DMSO) (Merck, Darmstadt, Germany, stored over 0.3nm molecular sieve beads) at about 90 °C with stirring and then cooled to room temperature. The solution is stirred at room temperature overnight to ensure complete solubilization/dissolution. The entire perethylation including the solubilization of the methylcellulose is performed using a dry nitrogen atmosphere in a 4 mL screw cap vial. After solubilization, the dissolved methylcellulose is transferred to a 22-mL screw-cap vial to begin the perethylation process. Powdered sodium hydroxide (freshly pestled, analytical grade, Merck, Darmstadt, Germany) and ethyl iodide (for synthesis, stabilized with silver, Merck-Schuchardt, Hohenbrunn, Germany) are introduced in a thirty-fold molar excess relative to the level of anhydroglucose units in the methylcellulose, and the mixture is vigorously stirred under nitrogen in the dark for three days at ambient temperature. The perethylation is repeated with addition of the threefold amount of the reagents sodium hydroxide and ethyl iodide compared to the first reagent addition, and stirring at room temperature is continued for an additional two days. Optionally, the reaction mixture can be diluted with up to 1.5 mL DMSO to ensure good mixing during the course of the reaction. Next, five mL of 5 % aqueous sodium thiosulfate solution is poured into the reaction mixture, and the mixture is then extracted three times with 4 mL of dichloromethane. The combined extracts are washed three times with 2 mL of water. The organic phase is dried with anhydrous sodium sulfate (about 1 g). After filtration, the solvent is removed with a gentle stream of nitrogen, and the sample is stored at 4 °C until needed.

Hydrolysis of about 5 mg of the perethylated samples is performed under nitrogen in a 2-mL screw-cap vial with 1 mL of 90 % aqueous formic acid under stirring at 100 °C for 1 hour. The acid is removed in a stream of nitrogen at 35-40 °C and the hydrolysis is repeated with 1 mL of 2M aqueous trifluoroacetic acid for 3 hours at 120 °C in an inert nitrogen atmosphere with stirring. After completion, the acid is removed to dryness in a stream of nitrogen at ambient temperature using ca. 1 mL of toluene for co-distillation.

The residues of the hydrolysis are reduced with 0.5 mL of 0.5-M sodium borodeuteride in 2N aqueous ammonia solution (freshly prepared) for 3 hours at room temperature with stirring. The excess reagent is destroyed by dropwise addition of about 200 µL of concentrated acetic acid. The resulting solution is evaporated to dryness in a stream of nitrogen at about 35-40 °C and subsequently dried in vacuum for 15 min at room temperature. The viscous residue is dissolved in 0.5 mL of 15 % acetic acid in methanol and evaporated to dryness at room temperature. This is done five times and repeated four additional times with pure methanol. After the final evaporation, the sample is dried in vacuum overnight at room temperature.

The residue of the reduction is acetylated with 600 µL of acetic anhydride and 150 µL of pyridine for 3 hrs at 90 °C. After cooling, the sample vial is filled with toluene and evaporated to dryness in a stream of nitrogen at room temperature. The residue is dissolved in 4 mL of dichloromethane and poured into 2 mL of water and extracted with 2 mL of dichloromethane. The extraction is repeated three times. The combined extracts are washed three times with 4 mL of water and dried with anhydrous sodium sulfate. The dried dichloromethane extract is subsequently submitted to GC analysis. Depending on the sensitivity of the GC system, a further dilution of the extract could be necessary.

Gas-liquid (GLC) chromatographic analyses are performed with Agilent 6890N type of gas chromatographs (Agilent Technologies GmbH, 71034 Boeblingen, Germany) equipped with Agilent J&W capillary columns (30 m, 0.25-mm ID, 0.25-µm phase layer thickness) operated with 1.5-bar helium carrier gas. The gas chromatograph is programmed with a temperature profile that held constant at 60 °C for 1 min, heated up at a rate of 20 °C / min to 200 °C, heated further up with a rate of 4 °C / min to 250 °C, and heated further up with a rate of 20 °C / min to 310 °C where it is held constant for another 10 min. The injector temperature is set to 280 °C and the temperature of the flame ionization detector (FID) is set to 300 °C. Exactly 1µL of each sample is injected in the splitless mode at 0.5-min valve time. Data are acquired and processed with a LabSystems Atlas work station.

Quantitative monomer composition data are obtained from the peak areas measured by GLC with FID detection. Molar responses of the monomers are calculated in line with the effective carbon number (ECN) concept but modified as described in the table below. The effective carbon number (ECN) concept has been described by Ackman (R.G. Ackman, J. Gas Chromatogr., 2 (1964) 173-179 and R.F. Addison, R.G. Ackman, J. Gas Chromatogr., 6 (1968) 135-138) and applied to the quantitative analysis of partially alkylated alditol acetates by Sweet et. al (D.P. Sweet, R.H. Shapiro, P. Albersheim, Carbohyd. Res., 40 (1975) 217-225).

### ECN increments used for ECN calculations:

| Type of carbon atom | ECN increment |
|---|---|
| hydrocarbon | 100 |
| primary alcohol | 55 |
| secondary alcohol | 45 |

In order to correct for the different molar responses of the monomers, the peak areas are multiplied by molar response factors MRFmonomer which are defined as the response relative to the 2,3,6-Me monomer. The 2,3,6-Me monomer is chosen as reference since it is present in all samples analyzed in the determination of s23 / s26.
MRFmonomer = ECN2,3,6-Me / ECNmonomer

The mol fractions of the monomers are calculated by dividing the corrected peak areas by the total corrected peak area according to the following formulas:
(1) s23 is the sum of the molar fractions of anhydroglucose units which meet the following condition [the two hydroxy groups in the 2- and 3-positions of the anhydroglucose unit are substituted with methyl groups, and the 6-position is not substituted (= 23-Me)]; and
(2) s26 is the sum of the molar fractions of anhydroglucose units which meet the following condition [the two hydroxy groups in the 2- and 6-positions of the anhydroglucose unit are substituted with methyl groups, and the 3-position is not substituted (= 26-Me)].

### Production of Methylcellulose MC-I

Methylcellulose MC-I is produced according to the following procedure. Finely ground wood cellulose pulp is loaded into a jacketed, agitated reactor. The reactor is evacuated and purged with nitrogen to remove oxygen, and then evacuated again. The reaction is carried out in two stages. In the first stage, a 50 weight percent aqueous solution of sodium hydroxide is sprayed onto the cellulose until the level reaches 1.8 mol of sodium hydroxide per mol of anhydroglucose units of the cellulose, and then the temperature is adjusted to 40 °C. After stirring the mixture of aqueous sodium hydroxide solution and cellulose for about 20 minutes at 40 °C, 1.39 mol of dimethyl ether and 2.5 mol of methyl chloride per mol of anhydroglucose units are added to the reactor. The contents of the reactor are then heated in 90 min to 80 °C. After having reached 80 °C, the first stage reaction is allowed to proceed for 5 min. Then the reaction is cooled down to 55 °C in 25 min.

The second stage of the reaction is started by addition of methyl chloride in an amount of 3.06 molar equivalents of methyl chloride per mol of anhydroglucose unit. The addition time for methyl chloride is 15 min. Then a 50 weight percent aqueous solution of sodium hydroxide at an amount of 1.7 mol of sodium hydroxide per mol of anhydroglucose units is added over a time period of 50 min. The rate of addition is 0.034 mol of sodium hydroxide per mol of anhydroglucose units per minute. After the second-stage addition is completed the contents of the reactor are heated up to 80 °C in 60 min and then kept at a temperature of 80 °C for 20 min.

After the reaction, the reactor is vented and cooled down to about 50 °C. The contents of the reactor are removed and transferred to a tank containing hot water. The crude MC-I is then neutralized with formic acid and washed chloride free with hot water (assessed by AgNO₃ flocculation test), cooled to room temperature and dried at 55 °C in an air-swept drier, and subsequently ground.

The methylcellulose MC-I has a DS(methyl) of 1.94 (31.8 wt.% methoxyl), a mole fraction (23-Me) of 0.0.073, a mole fraction (26-Me) of 0.315, an s23/s26 of 0.23, and a steady-shear-flow viscosity η(5 °C, 10 s⁻¹, 2 wt.% MC) of 17,200 mPa•s.

### Methylcellulose MC-II

Methylcellulose MC-II is commercially available from The Dow Chemical Company under the Trademark Methocel™ MX. Its steady-shear-flow viscosity η(5 °C, 10 s⁻¹, 2 wt.% MC) is 14,700 mPa·s, measured as a 2 wt.-% solution in water at 5 °C under the conditions listed in Table 1 below. Methylcellulose MC-II corresponds to the methylcellulose Methocel™ MX disclosed in International Patent Application No. 2014/117349.

### Methylcellulose MC-III

Methylcellulose MC-III is commercially available from Shin-Etsu Chemical Co. under the Trademark Metolose MCE-100 TS.

The properties of the methylcelluloses MC-I, MC-II and MC-III are listed in Table 1 below.

**Table 1**

| **Methyl cellulose** | **Viscosity at 10 s⁻¹ (5 °C) in mPa**·**s for c = 2 %** | **DS (Methyl)** | **s23** | **s26** | **s23/ s26** |
|---|---|---|---|---|---|
| MC-I | 17200 | 1.94 | 0.073 | 0.315 | 0.23 |
| MC-II | 14700 | 1.90 | 0.086 | 0.301 | 0.28 |
| MC-III | 22000 | 1.86 | 0.086 | 0.297 | 0.29 |

### Preparation of Methylcellulose Emulsion

Emulsions of water/crushed ice, pork fat (chopped, 2 mm) and methylcellulose MC-I, MC-II or MC-III were prepared in a vacuum bowl chopper Kilia 50 L. The amounts of water/crushed ice, pork fat and methylcellulose were as listed in Table 2 below. All percentages are based on the total weight of the emulsion.

Pork fat and methylcellulose MC-I, MC-II or MC-III were added to the bowl chopper and thoroughly chopped at a knife velocity of 5000 rpm at a temperature of 0 - 3°C. Then crushed ice /water (-4°C) was added quickly. Vacuum was applied. The blend was chopped at 5000 rpm for 3.5 minutes. The final emulsion had a temperature of 0°C. The emulsion was stored for 24 hours at - 18°C and then thawed at 2°C during a time period of 18 hours before usage.

**Table 2**

| **Component** | **methylcellulose emulsion A Amount in %** | **methylcellulose emulsion B Amount in %** |
|---|---|---|
| Crushed ice/water 1 / 1 wt. ratio | 75.5 | 76.625 |
| Pork fat, 2 mm | 20 | 20 |
| Methylcellulose | 4.5 | 3.375 |

### Preparation of Skin Emulsion

Skin Emulsion (pork rind : water weight ratio of 1:1) was prepared as follows: pork rind was soaked in water for 12 hours. Additionally 15 g of sodium lactate / kg pork rind was added. Then the pork rind was chopped until the temperature had increased from 21 °C to 30°C. Then 3g sodium phosphate / kg pork rind was added and chopped until a temperature of 35°C was reached. Crushed ice was added resulting in a final ratio of pork rind : water 1:1. The blend was chopped until it had a temperature of 15 - 16°C. Then it was cooled overnight at 2°C before usage.

### Preparation of Sausages of Examples 1 and 2 and Comparative Examples A - H

A sausage filling was produced in the above-mentioned bowl chopper using the ingredients listed in Table 3 below. All meat components were ground through a plate of 2 mm diameter.

Lean pork meat, MDM Chicken (MDM = Mechanically Deboned Meat) and skin emulsion (pork rind : water weight ratio of 1 : 1) were put into the bowl chopper. Also the cold methylcellulose emulsion A or B having the composition listed in Table 2 above was added. The blend was chopped shortly. Then the Additives listed in Table 3 and the crushed ice / water blend were added. The mixture was chopped under vacuum until its temperature had increased to 12°C.

**Table 3**

| **Components of Filling** | **Amount in wt.-%** | |
|---|---|---|
| | | **amount in kg** |
| Lean pork meat | 16.0 | 2.400 |
| MDM Chicken | 14.5 | 2.175 |
| Pork fat | 14.5 | 2.175 |
| Skin emulsion | 15.0 | 2.250 |
| Crushed ice / water 1 / 1 wt. ratio | 20.0 | 3.000 |
| methylcellulose emulsion | 20.0 | 3.000 |
| **Total** | 100 | 15.000 |
| | | |

| **Additives (based on total weight of Components of Filling, but excluding weight of additives** | **Amount in wt.-%** | **Amount in g** |
|---|---|---|
| Curing salt | 2.0 | 300 |
| Sodium diphospate | 0.3 | 45 |
| Sodium ascorbate | 0.05 | 7.5 |
| Flavoring "Wiener OG" | 0.5 | 75 |
| Potato starch-native | 2.0 | 300 |

One part of the produced filling was stuffed into manufactured artificial casings made from cellulose (more specifically, regenerated cellulose hydrate) that were water vapor permeable and smoke permeable and had a diameter of 22 mm. Such casings are known for usage in hot dog production. Hot dogs were produced by smoking according to the following procedure: 30 min. warming up, 10 min. drying, 10 min. smoking, 2 min. smoke condensation, 5 min. drying, 10 min. smoking, 2 min. smoke condensation and 3 min. drying. The temperature during the process was 55 - 60 °C. The hot dog samples were visually inspected and weighed by people skilled in the art of sausage production before and after smoking to determine the water evaporation through the casing during the smoking process. In Table 4 below the percent weight loss, based on the weight of the filling prior to smoking, is reported as "cooking loss". The cooking loss was 10 - 12 % in all Comparative Examples A - E. The people skilled in the art of sausage production did not notice a significant difference between the hot dogs of Comparative Examples A, B, C, D and E.

Another part of the produced filling was stuffed into water vapor impermeable synthetic sausage casings that are commonly used for cold cut production. The casings were made from polyamide and had a diameter of 60 mm. Cold cuts were produced by cooking cold cut samples of about 700 g each for 30 min. in water of 80 °C

Two cold cut samples comprising the same type of casing and filling and about the same amount of filling were weighed before cooking. The casings were also separately weighed to determine the exact amount of the filling before cooking. Due to the nature of the casing used for cold cut production, water did not evaporate through the casing during cooking. When water separated from the remainder of the filling, a two phase system was formed and the separated water could be observed in the casing. To determine the amount of water separated from the remainder of the filling after the cooking process, the casings were removed after cooking and the cold cut samples without the separated water were weighed. The difference between the weight of the cold cut samples before and after cooking, each without weight of the casing, was the amount of water separated from the remainder of the filling after the cooking process. This amount is reported in Table 3 below as percent weight loss, based on the weight of filling prior to cooking, and is designated as "cooking loss". The reported cooking loss represents the average of 2 samples.

**Table 4**

| **(Comp.) Example** | **Sausage type / Casing** | **Methylcellulose (MC)** | **Methylcellulose emulsion** | **wt.-% MC*** | **Cooking loss, %** |
|---|---|---|---|---|---|
| A | Hot dog, water vapor permeable casing, diameter 22 mm | MC-I | Emulsion A | 0.9 | 10-12 % |
| B | | MC-II | Emulsion A | 0.9 | |
| C | | MC-III | Emulsion A | 0.9 | |
| D | | MC-I | Emulsion B | 0.675 | |
| E | | MC-III | Emulsion B | 0.675 | |
| 1 | Cold cut, water vapor impermeable casing, diameter 60 mm | MC-I | Emulsion A | 0.9 | 0.00 |
| F | | MC-II | Emulsion A | 0.9 | 2.16 |
| G | | MC-III | Emulsion A | 0.9 | 0.50 |
| 2 | | MC-I | Emulsion B | 0.675 | 0.00 |
| H | | MC-III | Emulsion B | 0.675 | 4.76 |

| | | | | | |
|---|---|---|---|---|---|
| * based on total components of filling, but excluding additives | | | | | |

The people skilled in the art of sausage production did not notice a significant difference between i) the hot dogs of Comparative Examples A and D comprising as a binder methylcellulose MC-I (having an s23/ s26 of 0.23) and ii) the hot dogs of Comparative Examples B, C and E comprising as a binder methylcellulose MC-II or MC-III (having an s23/ s26 of 0.28 and 0.29, respectively).

In contrast thereto, the improvements of the cold cuts of Examples 1 and 2 over those of Comparative Examples F and H were readily noticeable in the visual inspection of the cold cuts by the people skilled in the art of sausage production. Examples 1 and 2 comprising as a binder methylcellulose MC-I (having an s23/s26 of 0.23) did not display any phase separation. The cold cuts of Comparative Examples F, G and H all displayed phase separation. In Comparative Examples F and H the separated water was clearly visible. Collections of water droplets were visible directly adjacent to the casing, and particularly at each of the two ends of the casing. This was not acceptable to customers.

## Claims

1. A food product comprising
(a) a casing made of a mono- or multilayered film of which at least one layer comprises a film-forming synthetic polymer, the casing having water vapor permeability of not more than 10 g/m²·d, measured according to DIN 53122 at 38 °C and 100% relative humidity, and
(b) a filling comprising animal, fungal or plant protein and a methylcellulose having anhydroglucose units joined by 1-4 linkages wherein hydroxy groups of anhydroglucose units are substituted with methyl groups such that s23/s26 is from 0.10 to 0.24,
wherein s23 is the molar fraction of anhydroglucose units wherein only the two hydroxy groups in the 2- and 3-positions of the anhydroglucose unit are substituted with methyl groups and
wherein s26 is the molar fraction of anhydroglucose units wherein only the two hydroxy groups in the 2- and 6-positions of the anhydroglucose unit are substituted with methyl groups.

2. The food product of claim 1 wherein in the methylcellulose hydroxy groups of anhydroglucose units are substituted with methyl groups such that s23/s26 is from 0.14 to 0.23.

3. The food product of claim 1 or claim 2 wherein the methylcellulose content is from 0.2 to 3.0 weight percent, based on the total weight of the filling (b).

4. The food product of claim 3 wherein the methylcellulose content is from 0.5 to 2.0 weight percent, based on the total weight of the filling (b).

5. The food product of any one of claims 1 to 4 wherein the methylcellulose has a viscosity of from 5,000 to 100,000 mPa·s, measured as a 2 wt.-% solution in water at 5 °C.

6. The food product of claim 5 wherein the methylcellulose has a viscosity of from 10,000 to 50,000 mPa·s, measured as a 2 wt.-% solution in water at 5 °C.

7. The food product of any one of claims 1 to 6 wherein the protein content is from 2 to 25 weight percent, based on the total weight of the filling (b).

8. The food product of any one of claims 1 to 7 wherein the film-forming polymer of at least one layer in the casing (a) is a polyamide, polyethylene, polypropylene, polyvinylidene chloride or polyester.

9. The food product of any one of claims 1 to 8 having a diameter of from 3 cm to 60 cm.

10. The food product of any one of claims 1 to 9 additionally comprising from 20 to 80 weight percent of water, based on the total weight of the filling (b).

11. The food product of any one of claims 1 to 10 being an emulsified meat product, an emulsified vegetarian protein product, a chopped meat product or pet food.

12. The food product of claim 11 being an emulsified meat product or an emulsified vegetarian protein product.

13. The food product of any one of claims 1 to 12 being a sausage.

14. The food product of any one of claims 1 to 13 being a cold cut.

15. A method of improving one or more properties selected from water binding capacity, juiciness, texture, resistance to shrinking during cooking, or boil-out control in a food product comprising (a) a casing made of a mono- or multilayered film of which at least one layer comprises a film-forming synthetic polymer and (b) a filling comprising animal, fungal or plant protein, the casing having water vapor permeability of not more than 10 g/m²·d, measured according to DIN 53122 at 38 °C and 100% relative humidity,
which method comprises the step of incorporating into the filling a methylcellulose having anhydroglucose units joined by 1-4 linkages wherein hydroxy groups of anhydroglucose units are substituted with methyl groups such that s23/s26 is from 0.10 to 0.24, wherein s23 is the molar fraction of anhydroglucose units wherein only the two hydroxy groups in the 2- and 3-positions of the anhydroglucose unit are substituted with methyl groups and wherein s26 is the molar fraction of anhydroglucose units wherein only the two hydroxy groups in the 2- and 6-positions of die anhydroglucose unit are substituted with methyl groups.

## Patentansprüche

1. Nahrungsmittelprodukt umfassend
(a) eine Hülle, die aus einer Einzel- oder Mehrschichtfolie gebildet ist, wovon mindestens eine Schicht ein folienbildendes, synthetisches Polymer umfasst, wobei die Hülle eine Wasserdampfdurchlässigkeit von nicht mehr als 10 g/m²·d, DIN 53122 entsprechend bei 38 °C und 100 % relativer Feuchte gemessen, aufweist und
(b) eine Füllung, die tierisches, Pilz- oder Pflanzenprotein und eine Methylcellulose umfasst, die Anhydroglucoseeinheiten aufweist, die durch 1-4 Verknüpfungen verbunden sind, wobei Hydroxygruppen von Anhydroglucoseeinheiten mit Methylgruppen derart substituiert sind, dass s23/s26 0,10 bis 0,24 beträgt,
wobei s23 der Molenbruch von Anhydroglucoseeinheiten ist, wobei nur die zwei Hydroxygruppen an den 2- und 3-Positionen der Anhydroglucoseeinheit mit Methylgruppen substituiert sind und
wobei s26 der Molenbruch von Anhydroglucoseeinheiten ist, wobei nur die zwei Hydroxygruppen an den 2- und 6-Positionen der Anhydroglucoseeinheit mit Methylgruppen substituiert sind.

2. Nahrungsmittelprodukt nach Anspruch 1, wobei die Methylcellulosehydroxygruppen von Anhydroglucoseeinheiten mit Methylgruppen so substituiert sind, dass s23/s26 0,14 bis 0,23 beträgt.

3. Nahrungsmittelprodukt nach Anspruch 1 oder Anspruch 2, wobei der Methylcellulosegehalt 0,2 bis 0,3 Gewichtsprozent, auf das Gesamtgewicht der Füllung (b) bezogen, beträgt.

4. Nahrungsmittelprodukt nach Anspruch 3, wobei der Methylcellulosegehalt 0,5 bis 2,0 Gewichtsprozent, auf das Gesamtgewicht der Füllung (b) bezogen, beträgt.

5. Nahrungsmittelprodukt nach irgend einem der Ansprüche 1 bis 4, wobei die Methylcellulose eine Viskosität von 5.000 bis 100.000 mPa·s, als Lösung von 2 Gew.-% in Wasser bei 5 Grad Celsius gemessen, aufweist.

6. Nahrungsmittelprodukt nach Anspruch 5, wobei die Methylcellulose eine Viskosität von 10.000 bis 50.000 mPa·s, als Lösung von 2 Gew.-% in Wasser bei 5 °C gemessen, aufweist.

7. Nahrungsmittelprodukt nach irgendeinem der Ansprüche 1 bis 6, wobei der Proteingehalt 2 bis 25 Gewichtsprozent, auf das Gesamtgewicht der Füllung (b) bezogen, beträgt.

8. Nahrungsmittelprodukt nach irgendeinem der Ansprüche 1 bis 7, wobei das folienbildende Polymer mindestens einer Schicht in der Hülle (a) ein Polyamid, Polyethylen, Polypropylen, Polyvinylidenchlorid oder Polyester ist.

9. Nahrungsmittelprodukt nach irgendeinem der Ansprüche 1 bis 8, das einen Durchmesser von 3 cm bis 60 cm aufweist.

10. Nahrungsmittelprodukt nach irgendeinem der Ansprüche 1 bis 9, zusätzlich 20 bis 80 Gewichtsprozent Wasser, auf das Gesamtgewicht der Füllung (b) bezogen, umfasst.

11. Nahrungsmittelprodukt nach irgendeinem der Ansprüche 1 bis 10, das ein emulgiertes Fleischprodukt, ein emulgiertes Vegetarierproteinprodukt, einen gehacktes Fleischprodukt oder Haustierfutter ist.

12. Nahrungsmittelprodukt nach Anspruch 11, das ein emulgiertes Fleischprodukt oder ein emulgiertes Vegetarierproteinprodukt ist.

13. Nahrungsmittelprodukt nach irgendeinem der Ansprüche 1 bis 12, das eine Wurst ist.

14. Nahrungsmittelprodukt nach irgendeinem der Ansprüche 1 bis 13, das ein Aufschnitt ist.

15. Verfahren zum Verbessern einer oder mehrerer Eigenschaften ausgewählt unter Wasserbindungsvermögen, Saftigkeit, Textur; Resistenz gegen Schrumpfen während des Kochens oder Auskochregulierung in einem Nahrungsmittelprodukt umfassend (a) eine Hülle, die aus einer Einzel- oder Mehrschichtfolie gebildet ist, wovon mindestens eine Schicht ein folienbildendes, synthetisches Polymer umfasst, und (b) eine Füllung, die tierisches, Pilz- oder Pflanzenprotein umfasst, wobei die Hülle eine Wasserdampfdurchlässigkeit von nicht mehr als 10 g/m²·d, DIN 53122 entsprechend bei 38 °C und 100 % relativer Feuchte gemessen, aufweist,
welches Verfahren den Schritt des Integrierens, in die Füllung, einer Methylcellulose umfasst, die Anhydroglucoseeinheiten aufweist, die durch 1-4 Verknüpfungen verbunden sind, wobei Hydroxygruppen von Anhydroglucoseeinheiten mit Methylgruppen derart substituiert sind, dass s23/s26 0,10 bis 0,24 beträgt, wobei s23 der Molenbruch von Anhydroglucoseeinheiten ist, wobei nur die zwei Hydroxygruppen an den 2- und 3-Positionen der Anhydroglucoseeinheit mit Methylgruppen substituiert sind und wobei s26 der Molenbruch von Anhydroglucoseeinheiten ist, wobei nur die zwei Hydroxygruppen an den 2- und 6-Positionen der Anhydroglucoseeinheit mit Methylgruppen substituiert sind.

## Revendications

1. Produit alimentaire comprenant
(a) un boyau constitué d'un film mono ou multicouche dont au moins une couche comprend un polymère synthétique formant film, le boyau ayant une perméabilité à la vapeur d'eau de pas plus de 10 g/m²·d, mesurée selon la norme DIN 53122 à 38°C et 100 % d'humidité relative, et
(b) une charge comprenant une protéine d'origine animale, fongique ou végétale et une méthylcellulose ayant des motifs anhydroglucoses joints par 1 à 4 liaisons où les groupes hydroxyle des motifs anhydroglucoses sont substitués par des groupes méthyle de sorte que s23/s26 est de 0,10 à 0,24,
où s23 est la fraction molaire des motifs anhydroglucoses où uniquement les deux groupes hydroxyle dans les positions 2 et 3 du motif anhydroglucose sont substitués par des groupes méthyle et
où s26 est la fraction molaire des motifs anhydroglucoses où uniquement les deux groupes hydroxyle dans les positions 2 et 6 du motif anhydroglucose sont substitués par des groupes méthyle.

2. Produit alimentaire selon la revendication 1 dans lequel dans les groupes hydroxyle de méthylcellulose des motifs anhydroglucoses sont substitués par des groupes méthyle de sorte que s23/s26 est de 0,14 à 0,23.

3. Produit alimentaire selon la revendication 1 ou la revendication 2 dans lequel la teneur en méthylcellulose est de 0,2 à 3,0 pour cent en poids, sur la base du poids total de la charge (b).

4. Produit alimentaire selon la revendication 3 dans lequel la teneur en méthylcellulose est de 0,5 à 2,0 pour cent en poids, sur la base du poids total de la charge (b).

5. Produit alimentaire selon l'une quelconque des revendications 1 à 4 dans lequel la méthylcellulose présente une viscosité de 5 000 à 100 000 mPa·s, mesurée comme une solution à 2 % en pds dans de l'eau à 5°C.

6. Produit alimentaire selon la revendication 5 dans lequel la méthylcellulose présente une viscosité de 10 000 à 50 000 mPa·s, mesurée comme une solution à 2 % en pds dans de l'eau à 5°C.

7. Produit alimentaire selon l'une quelconque des revendications 1 à 6 dans lequel la teneur en protéine est de 2 à 25 pour cent en poids, sur la base du poids total de la charge (b).

8. Produit alimentaire selon l'une quelconque des revendications 1 à 7 dans lequel le polymère formant film d'au moins une couche dans le boyau (a) est un polyamide, polyéthylène, polypropylène, poly(chlorure de vinylidène) ou polyester.

9. Produit alimentaire selon l'une quelconque des revendications 1 à 8 ayant un diamètre de 3 cm à 60 cm.

10. Produit alimentaire selon l'une quelconque des revendications 1 à 9 comprenant additionnellement de 20 à 80 pour cent en poids d'eau, sur la base du poids total de la charge (b).

11. Produit alimentaire selon l'une quelconque des revendications 1 à 10 étant un produit carné émulsifié, un produit de protéine végétarienne émulsifié, un produit de viande hachée ou un aliment pour animal domestique.

12. Produit alimentaire selon la revendication 11 étant un produit carné émulsifié ou un produit de protéine végétarienne émulsifié.

13. Produit alimentaire selon l'une quelconque des revendications 1 à 12 qui est une saucisse.

14. Produit alimentaire selon l'une quelconque des revendications 1 à 13 qui est une tranche froide.

15. Procédé d'amélioration d'une ou plusieurs propriétés sélectionnées parmi la capacité de liaison à l'eau, le caractère juteux, la texture, la résistance au rétrécissement durant la cuisson, ou le contrôle du débordement de l'ébullition dans un produit alimentaire comprenant (a) un boyau constitué d'un film mono ou multicouche dont au moins une couche comprend un polymère synthétique formant film et (b) une charge comprenant une protéine d'origine animale, fongique ou végétale, le boyau ayant une perméabilité à la vapeur d'eau de pas plus de 10 g/m²·d, mesurée selon la norme DIN 53122 à 38°C et 100 % d'humidité relative,
lequel procédé comprend l'étape d'incorporation dans la charge d'une méthylcellulose ayant des motifs anhydroglucoses joints par 1 à 4 liaisons où les groupes hydroxyle des motifs anhydroglucoses sont substitués par des groupes méthyle de sorte que s23/s26 est de 0,10 à 0,24, où s23 est la fraction molaire des motifs anhydroglucoses où uniquement les deux groupes hydroxyle dans les positions 2 et 3 du motif anhydroglucose sont substitués par des groupes méthyle et où s26 est la fraction molaire des motifs anhydroglucoses où uniquement les deux groupes hydroxyle dans les positions 2 et 6 du motif anhydroglucose sont substitués par des groupes méthyle.
